# EUROPEAN PATENT APPLICATION

(11) **EP 4 503 193 A1**
(43) Date of publication of application: **05.02.2025**
(21) Application number: 22934053.4
(22) Date of filing: 30.03.2022
(51) Int. Cl.: H01M 4/62, C08F 220/18, C08F 220/48, C08F 220/32

(54) **ELECTROCHEMICAL APPARATUS AND ELECTRONIC APPARATUS COMPRISING SAME**

(71) Applicant: Ningde Amperex Technology Limited, Ningde, Fujian 352100 (CN)
(72) Inventor: YU, Lei, Ningde, Fujian 352100 (CN)
(74) Representative: Icosa
(86) International application number: PCT/CN2022/083889
(87) International publication number: WO 2023/184198

(57) **Abstract**

This application provides an electrochemical apparatus and an electronic apparatus including the same. The electrochemical apparatus includes a positive electrode, a negative electrode, a separator disposed between the positive electrode and the negative electrode, and an electrolyte. The negative electrode includes a negative electrode current collector and a negative electrode active material layer disposed on a surface of the negative electrode current collector, where the negative electrode active material layer includes a negative electrode binder with structural formula I. In the technical solution of this application, the negative electrode binder has the structural formula I, which provides a large number of lithium ion exchange sites to enhance ionic conductivity of the negative electrode binder, thereby improving fast charging performance and discharging performance of the electrochemical apparatus in a low-temperature environment.

## Description

### TECHNICAL FIELD

This application relates to the field of electrochemical apparatus technologies, and specifically, to an electrochemical apparatus and an electronic apparatus including the same.

### BACKGROUND

Electrochemical apparatuses, such as secondary batteries, have been widely used in fields such as consumer electronic products, electric transportation tools, and aerospace due to their advantages such as high energy density, long cycle life, and environmental friendliness. Fast charging performance, as a core indicator of the performance of electrochemical apparatus, plays a crucial role in application, experience, and popularization, especially in consumer electronic products.

An electrode plate of an electrochemical apparatus typically includes a current collector and an active material layer disposed on a surface of the current collector. The active material layer may include an active material, a conductive agent, a binder, and the like. The binder adheres the active material to the current collector, the active material to another active material, and the active material to the conductive agent, thereby enhancing electronic contact between the active material and the conductive agent as well as between the active material and the current collector, and better stabilizing the structure of the electrode plate.

However, the existing binder has poor affinity with an electrolyte in the electrochemical apparatus, which hinders conduction of lithium ions in the binder during charging and discharging, and in turn increases interfacial impedance of the electrode plate, leading to deteriorated fast charging performance of the electrochemical apparatus. Especially in a low-temperature environment, the fast charging performance of the electrochemical apparatus deteriorates more significantly, and the discharging performance of the electrochemical apparatus in a low-temperature environment also severely decreases.

### SUMMARY

This application provides an electrochemical apparatus and an electronic apparatus including the same, where the electrochemical apparatus has excellent fast charging performance and discharging performance in a low-temperature environment.

According to a first aspect, this application provides an electrochemical apparatus, where the electrochemical apparatus includes:
a positive electrode;
a negative electrode, where the negative electrode includes a negative electrode current collector and a negative electrode active material layer disposed on a surface of the negative electrode current collector, where the negative electrode active material layer includes a negative electrode binder with structural formula I;
a separator disposed between the positive electrode and the negative electrode; and
an electrolyte, where 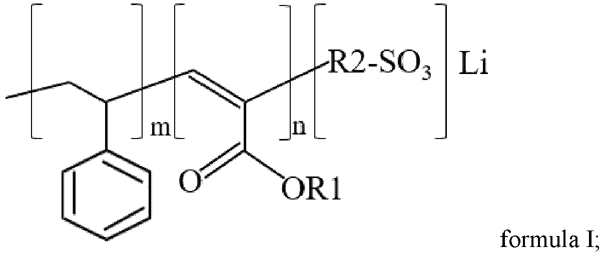 where
in the structural formula I, m is an integer between 1 and 10000, n is an integer between 1 and 10000, R1 is selected from C₁ to C₈ alkyl groups, and R2 is selected from C₁ to C₁₅ alkyl groups.

In the technical solution of this application, the negative electrode binder has the structural formula I, which provides a large number of lithium ion exchange sites to enhance ionic conductivity of the negative electrode binder, thereby improving fast charging performance and discharging performance of the electrochemical apparatus in a low-temperature environment.

In some embodiments of this application, based on a total mass of the negative electrode active material layer, a mass percentage of the negative electrode binder is 0.5% to 5.0%.

In some embodiments of this application, based on a total mass of the negative electrode active material layer, a mass percentage of lithium in the negative electrode binder is 0.5% to 5%.

In some embodiments of this application, ionic conductivity of the negative electrode binder is 0.06 mS/cm to 1.0 mS/cm.

In some embodiments of this application, the negative electrode binder includes the following preparation raw materials: aromatic vinyl monomer, ethylenically unsaturated carboxylic acid monomer, ethylenically unsaturated carboxylic ester monomer, and monomer having a lithium sulfonate group.

In some embodiments of this application, based on a total mass of the negative electrode binder, a mass percentage of the monomer having a lithium sulfonate group is 0.5% to 15%.

In some embodiments of this application, the aromatic vinyl monomer is selected from at least one of styrene, α-methylstyrene, or divinylbenzene;
the ethylenically unsaturated carboxylic acid monomer is selected from at least one of acrylic acid or methacrylic acid;
the ethylenically unsaturated carboxylic ester monomer is selected from at least one of methyl acrylate, ethyl acrylate, butyl acrylate, isopropyl acrylate, n-butyl acrylate, hexyl acrylate, heptyl acrylate, isooctyl acrylate, lauryl acrylate, methyl methacrylate, ethyl methacrylate, n-propyl methacrylate, isopropyl methacrylate, or isooctyl methacrylate; and
the monomer having a lithium sulfonate group is selected from at least one of lithium 2-acrylamido-2-methylpropanesulfonate, lithium p-styrenesulfonate, lithium triflate, or lithium dodecyl sulfonate.

In some embodiments of this application, the preparation raw materials of the negative electrode binder further include crosslinking monomer, where the crosslinking monomer is selected from at least one of tris(propylene glycol) diacrylate, tripropylene glycol dimethacrylate, dipropylene glycol dimethacrylate, hydroxyethyl acrylate, hydroxypropyl acrylate, N-hydroxymethyl acrylamide, monobutyl itaconate, divinylbenzene, butadiene, isoprene, dicyclopentadiene, divinylnaphthalene, N,N'-methylenebisacrylamide, divinyl phthalate, pentaerythritol diallyl ether, pentaerythritol triallyl ether, pentaerythritol tetraallyl ether, trimethylolpropane diallyl ether, trimethylolpropane triallyl, or polyethyleneimine.

In some embodiments of this application, an ionic resistance of the negative electrode is 15 mΩ to 25 mΩ.

According to a second aspect, this application further provides an electronic apparatus, where the electronic apparatus includes the electrochemical apparatus according to any one of the foregoing embodiments.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

This application can be better understood from the following description of specific embodiments of this application with reference to the accompanying drawings. Other features, objectives, and advantages of this application will become more obvious by reading the following detailed description of the non-limitative embodiments with reference to the accompanying drawings, where the same or similar reference signs represent the same or similar features.
FIG. 1 is an infrared spectrogram of a negative electrode binder prepared in some examples of this application; and
FIG. 2 is a surface state diagram of lithium-ion batteries prepared in Example 1 and Comparative Example 1 being discharged at 1.0C and 0°C and at 1.2C and 0°C.

### DETAILED DESCRIPTION

The features and example embodiments of various aspects of this application will be described in detail below. In the following detailed description, many specific details are disclosed for a comprehensive understanding of this application. However, it is obvious to persons skilled in the art that this application can be implemented without some of these specific details. The following description of some embodiments is only to provide a better understanding of this application by showing examples of this application. This application is not limited to any specific configurations and algorithms mentioned below, but covers any modifications, replacements, and improvements of elements, components, and algorithms without departing from the spirit of this application. In the accompanying drawings and description below, the well-known structures and technologies are not shown in order to avoid unnecessary ambiguity to this application.

This application provides an electrochemical apparatus including a positive electrode, a negative electrode, a separator disposed between the positive electrode and the negative electrode, and an electrolyte. The negative electrode includes a negative electrode current collector and a negative electrode active material layer disposed on a surface of the negative electrode current collector, where the negative electrode active material layer includes a negative electrode binder with structural formula I: 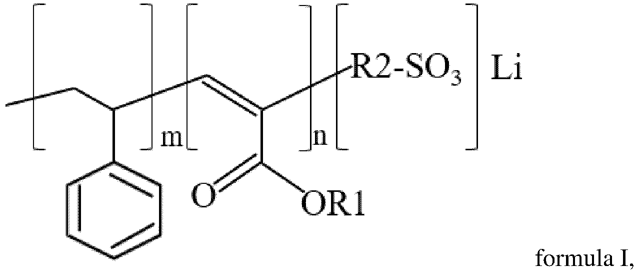 where
in the structural formula I, m is an integer between 1 and 10000, n is an integer between 1 and 10000, R1 is selected from C₁ to C₈ alkyl groups, and R2 is selected from C₁ to C₁₅ alkyl groups.

In the technical solution of this application, the negative electrode binder has the structural formula I, which provides a large number of lithium ion exchange sites to enhance ionic conductivity of the negative electrode binder, thereby improving fast charging performance and discharging performance of the electrochemical apparatus in a low-temperature environment.

In some embodiments of this application, based on a total mass of the negative electrode active material layer, a mass percentage of the negative electrode binder is 0.5% to 5.0%. The mass percentage of the negative electrode binder falling within the foregoing range can reduce an ionic resistance of the negative electrode, helping to improve the fast charging performance and discharging performance of the electrochemical apparatus in a low-temperature environment.

For example, the mass percentage of the negative electrode binder may be but is not limited to 0.50%, 0.60%, 0.70%, 0.80%, 0.85%, 0.90%, 0.95%, 1.0%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2.0%, 2.5%, 3.0%, 3.5%, 4.0%, 4.5%, or 5.0%.

In some embodiments of this application, based on a total mass of the negative electrode active material layer, a mass percentage of lithium in the negative electrode binder is 0.5% to 5%. The mass percentage of lithium in the negative electrode binder falling within the foregoing range can provide the negative electrode with a large number of lithium ion exchange sites to enhance the ionic conductivity of the negative electrode binder, thereby improving the fast charging performance and discharging performance of the electrochemical apparatus in a low-temperature environment.

For example, the mass percentage of lithium in the negative electrode binder may be but is not limited to 0.50%, 0.55%, 0.60%, 0.65%, 0.70%, 0.75%, 0.80%, 0.85%, 0.90%, 0.95%, 1.0%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, 2.0%, 2.05%, 2.1%, 2.15%, 2.2%, 2.25%, 2.3%, 2.35%, 2.4%, 2.45%, 2.5%, 2.55%, 2.6%, 2.65%, 2.7%, 2.75%, 2.8%, 2.85%, 2.9%, 2.95%, 3.0%, 3.05%, 3.1%, 3.15%, 3.2%, 3.25%, 3.3%, 3.35%, 3.4%, 3.45%, 3.5%, 3.55%, 3.6%, 3.65%, 3.7%, 3.75%, 3.8%, 3.85%, 3.9%, 3.95%, 4.0%, 4.05%, 4.1%, 4.15%, 4.2%, 4.25%, 4.3%, 4.35%, 4.4%, 4.45%, 4.5%, 4.55%, 4.6%, 4.65%, 4.7%, 4.75%, 4.8%, 4.85%, 4.9%, 4.95%, or 5.0%.

In some embodiments of this application, ionic conductivity of the binder is 0.06 mS/cm to 1.0 mS/cm. The ionic conductivity of the binder falling within the foregoing range can facilitate conduction of lithium ions, thereby helping to improve the fast charging performance and discharging performance of the electrochemical apparatus in a low-temperature environment.

For example, the ionic conductivity of the binder may be but is not limited to 0.060 mS/cm, 0.061 mS/cm, 0.062 mS/cm, 0.063 mS/cm, 0.064 mS/cm, 0.065 mS/cm, 0.066 mS/cm, 0.067 mS/cm, 0.068 mS/cm, 0.069 mS/cm, 0.070 mS/cm, 0.071 mS/cm, 0.072 mS/cm, 0.073 mS/cm, 0.074 mS/cm, 0.075 mS/cm, 0.076 mS/cm, 0.077 mS/cm, 0.078 mS/cm, 0.079 mS/cm, 0.080 mS/cm, 0.081 mS/cm, 0.082 mS/cm, 0.083 mS/cm, 0.084 mS/cm, 0.085 mS/cm, 0.086 mS/cm, 0.087 mS/cm, 0.088 mS/cm, 0.089 mS/cm, 0.090 mS/cm, 0.091 mS/cm, 0.092 mS/cm, 0.093 mS/cm, 0.094 mS/cm, 0.095 mS/cm, 0.096 mS/cm, 0.097 mS/cm, 0.098 mS/cm, 0.099 mS/cm, 0.10 mS/cm, 0.20 mS/cm, 0.50 mS/cm, or 1.0 mS/cm.

In some embodiments of this application, the negative electrode binder with the structural formula I includes the following raw material constituents by mass percentage:
aromatic vinyl monomer, 40% to 90%;
ethylenically unsaturated carboxylic acid monomer, 1% to 10%;
ethylenically unsaturated carboxylic ester monomer, 40% to 90%;
monomer having a lithium sulfonate group, 0.5% to 15%;
initiator, 0.04% to 1.5%;
emulsifier, 0.05% to 1.5%; and
crosslinking monomer, 0.5% to 2%; where
a sum of the mass percentages of the raw material constituents is 100%.

In these embodiments of this application, the aromatic vinyl monomer, as a first hard monomer, can impart cohesion to the binder. The cohesion can maintain the original structure of an electrode plate in a low-temperature environment, that is, resisting deformation under external forces. In addition, the mass percentage of the aromatic vinyl monomer is controlled within the range of 40% to 90%, helping to improve the fast charging performance and discharging performance of the electrochemical apparatus in a low-temperature environment.

For example, the mass percentage of the aromatic vinyl monomer may be but is not limited to 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, or 90%.

For example, the aromatic vinyl monomer may be selected from at least one of styrene, α-methylstyrene, or divinylbenzene. It can be understood that the aromatic vinyl monomer is any one or a mixture of more than two of styrene, α-methylstyrene, and divinylbenzene, and a sum of mass percentages of the monomers in the mixture can be freely combined within the range of 40% to 90%.

In these embodiments of this application, the ethylenically unsaturated carboxylic acid monomer, as a second hard monomer, generates a synergistic effect with the aromatic vinyl monomer to enhance the cohesion of the binder. In addition, the mass percentage of the ethylenically unsaturated carboxylic acid monomer is controlled within the range of 1% to 10%, helping to improve the fast charging performance and discharging performance of the electrochemical apparatus in a low-temperature environment.

For example, the mass percentage of the ethylenically unsaturated carboxylic acid monomer may be but is not limited to 1%, 2%, 3%, 4%, 5%, 6%, 7%, 8%, 9%, or 10%.

In some embodiments of this application, the ethylenically unsaturated carboxylic acid monomer is selected from at least one of acrylic acid or methacrylic acid.

In these embodiments of this application, the ethylenically unsaturated carboxylic ester monomer, as a soft monomer, can impart adhesion performance to the binder, enabling the binder to adhere an active material to the current collector, the active material to another active material, and the active material to a conductive agent, thereby enhancing electronic contact between the active material and the conductive agent as well as between the active material and the current collector, and better stabilizing the structure of the electrode plate. In addition, the mass percentage of the ethylenically unsaturated carboxylic ester monomer is controlled within the range of 40% to 90%.

For example, the mass percentage of the ethylenically unsaturated carboxylic ester monomer may be but is not limited to 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, or 90%.

In some embodiments of this application, the ethylenically unsaturated carboxylic ester monomer can cross-link with the aromatic vinyl monomer and the ethylenically unsaturated carboxylic acid monomer to form an emulsion. Because the ethylenically unsaturated carboxylic ester monomer has ester functional groups, affinity of the binder with the electrolyte can be improved, which is conducive to enhancing the ionic conductivity of the binder. In addition, molecular chains of the emulsion contain a large number of electronegative elements, namely, lone pairs of electrons, which continually undergo complexation/decomplexation with lithium ions under the action of an electric field, facilitating diffusion of lithium ions, thereby helping to improve the fast charging performance and discharging performance of the electrochemical apparatus in a low-temperature environment.

For example, the ethylenically unsaturated carboxylic ester monomer is selected from at least one of methyl acrylate, ethyl acrylate, butyl acrylate, isopropyl acrylate, n-butyl acrylate, hexyl acrylate, heptyl acrylate, isooctyl acrylate, lauryl acrylate, methyl methacrylate, ethyl methacrylate, n-propyl methacrylate, isopropyl methacrylate, or isooctyl methacrylate. It can be understood that the ethylenically unsaturated carboxylic ester monomer may be any one or a mixture of more than two of methyl acrylate, ethyl acrylate, butyl acrylate, isopropyl acrylate, n-butyl acrylate, hexyl acrylate, heptyl acrylate, isooctyl acrylate, lauryl acrylate, methyl methacrylate, ethyl methacrylate, n-propyl methacrylate, isopropyl methacrylate, and isooctyl methacrylate, and a sum of mass percentages of the monomers in the mixture can be freely combined within the range of 40% to 90%.

In these embodiments of this application, the monomer having a lithium sulfonate group, as a functional monomer, can modify the emulsion formed by the hard monomers and the soft monomer, providing a large number of lithium ion exchange sites to enhance the ionic conductivity of the negative electrode binder. In addition, the mass percentage of the monomer having a lithium sulfonate group is controlled within the range of 0.5% to 15.0%, improving the fast charging performance and discharging performance of the electrochemical apparatus in a low-temperature environment.

For example, the mass percentage of the monomer having a lithium sulfonate group may be but is not limited to 0.5%, 1.0%, 1.5%, 2.0%, 2.5%, 3.0%, 3.5%, 4.0%, 4.5%, 5.0%, 5.5%, 6.0%, 6.5%, 7.0%, 7.5%, 8.0%, 8.5%, 9.0%, 9.5%, 10.0%, 10.5%, 11.0%, 11.5%, 12.0%, 12.5%, 13.0%, 13.5%, 14.0%, 14.5%, or 15.0%.

In some embodiments of this application, the monomer having a lithium sulfonate group is selected from at least one of lithium 2-acrylamido-2-methylpropanesulfonate, lithium p-styrenesulfonate, lithium triflate, or lithium dodecyl sulfonate. It can be understood that the monomer having a lithium sulfonate group may be any one or a mixture of more than two of lithium 2-acrylamido-2-methylpropanesulfonate, lithium p-styrenesulfonate, lithium triflate, and lithium dodecyl sulfonate, and a sum of mass percentages of the monomers in the mixture can be freely combined within the range of 0.5% to 15.0%.

In these embodiments of this application, the initiator can initiate a polymerization reaction of the aromatic vinyl monomer, the ethylenically unsaturated carboxylic acid monomer, the ethylenically unsaturated carboxylic ester monomer, and the monomer having a lithium sulfonate group to form an emulsion. In addition, the mass percentage of the initiator is controlled within the range of 0.04% to 1.5%.

For example, the mass percentage of the initiator may be but is not limited to 0.04%, 0.05%, 0.06%, 0.07%, 0.08%, 0.09%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.0%, 1.05%, 1.1%, 1.15%, 1.2%, 1.25%, 1.3%, 1.35%, 1.4%, 1.45%, or 1.5%.

In some embodiments of this application, the initiator is selected from peroxide and/or azo compound.

For example, the peroxide is selected from at least one of benzoyl peroxide, tert-butyl hydroperoxide, ammonium persulfate, or potassium persulfate. It can be understood that the peroxide may be any one or a mixture of more than two of benzoyl peroxide, tert-butyl hydroperoxide, ammonium persulfate, and potassium persulfate, and a sum of mass percentages of the peroxides in the mixture can be freely combined within the range of 0.04% to 1.5%.

For example, the azo compound is selected from at least one of azobisisobutyronitrile, azobisisoheptonitrile, azobisdicyclohexylmethanenitrile, azobisisobutyramidine hydrochloride, or azobisisobutylimidazoline hydrochloride. It can be understood that the azo compound may be any one or a mixture of more than two of azobisisobutyronitrile, azobisisoheptonitrile, azobisdicyclohexylmethanenitrile, azobisisobutyramidine hydrochloride, and azobisisobutylimidazoline hydrochloride, and a sum of mass percentages of the azo compounds in the mixture can be freely combined within the range of 0.04% to 1.5%.

In some specific embodiments of this application, the initiator may be selected from V-50 initiator, VA-044 initiator, or VA061 initiator.

In some embodiments of this application, the initiator includes peroxide and azo compound, and specific types of the peroxide and the azo compound are as described above. A sum of mass percentages of the initiators can be freely combined within the range of 0.04% to 1.5%.

In these embodiments of this application, the emulsifier can perform emulsification, helping the aromatic vinyl monomer, the ethylenically unsaturated carboxylic acid monomer, the ethylenically unsaturated carboxylic ester monomer, and the monomer having a lithium sulfonate group to form a stable emulsion. In these embodiments of this application, the mass percentage of the emulsifier is controlled within the range of 0.05% to 1.5%.

For example, the mass percentage of the emulsifier may be but is not limited to 0.05%, 0.06%, 0.07%, 0.08%, 0.09%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.0%, 1.05%, 1.1%, 1.15%, 1.2%, 1.25%, 1.3%, 1.35%, 1.4%, 1.45%, or 1.5%.

In some embodiments of this application, the emulsifier is selected from at least one of anionic emulsifier or nonionic emulsifier. These emulsifiers are conducive to improving the affinity of the binder with the electrolyte, which facilitates conduction of lithium ions in the binder, and in turn reduces interfacial impedance of the electrode plate, thereby improving the fast charging performance and discharging performance of the electrochemical apparatus in a low-temperature environment.

In some embodiments of this application, the anionic emulsifier may be selected from at least one of carboxylate, sulfate ester salt, or sulfonate. For example, the anionic emulsifier may be potassium laurate, sodium dodecyl sulfate (C12H25OSO3Na), sodium dioctyl sulfosuccinate, or the like.

In some embodiments of this application, the nonionic emulsifier is selected from fatty alcohol ethoxylate and/or alkylphenol ethoxylate.

In these embodiments of this application, the crosslinking monomer can cause the monomers to undergo covalent crosslinking. In these embodiments of this application, the mass percentage of the crosslinking monomer is controlled within the range of 0.5% to 2%.

For example, the mass percentage of the crosslinking monomer may be but is not limited to 0.50%, 0.55%, 0.60%, 0.65%, 0.70%, 0.75%, 0.80%, 0.85%, 0.90%, 0.95%, 1.0%, 1.05%, 1.1%, 1.15%, 1.2%, 1.25%, 1.3%, 1.35%, 1.4%, 1.45%, 1.5%, 1.55%, 1.6%, 1.65%, 1.7%, 1.75%, 1.8%, 1.85%, 1.9%, 1.95%, or 2.0%.

In some embodiments of this application, the crosslinking monomer is selected from acrylic crosslinking monomer and/or vinyl crosslinking monomer.

For example, the acrylic crosslinking monomer is selected from at least one of tris(propylene glycol) diacrylate, tripropylene glycol dimethacrylate, dipropylene glycol dimethacrylate, hydroxyethyl acrylate, hydroxypropyl acrylate, or N-hydroxymethyl acrylamide. It can be understood that the acrylic crosslinking monomer may be any one or a mixture of more than two of tris(propylene glycol) diacrylate, tripropylene glycol dimethacrylate, dipropylene glycol dimethacrylate, hydroxyethyl acrylate, hydroxypropyl acrylate, and N-hydroxymethyl acrylamide, and a sum of mass percentages of the crosslinking monomers in the mixture can be freely combined within the range of 0.5% to 2.0%.

For example, the vinyl crosslinking monomer is selected from at least one of monobutyl itaconate, divinylbenzene, butadiene, isoprene, dicyclopentadiene, divinylnaphthalene, N,N'-methylenebisacrylamide, divinyl phthalate, pentaerythritol diallyl ether, pentaerythritol triallyl ether, pentaerythritol tetraallyl ether, trimethylolpropane diallyl ether, trimethylolpropane triallyl, or polyethyleneimine. It can be understood that the vinyl crosslinking monomer may be any one or a mixture of more than two of the foregoing crosslinking monomers, and a sum of mass percentages of the crosslinking monomers in the mixture can be freely combined within the range of 0.5% to 2.0%.

In some embodiments of this application, the crosslinking monomer may include acrylic crosslinking monomer and vinyl crosslinking monomer, and specific types of the acrylic crosslinking monomer and the vinyl crosslinking monomer are as described above. A sum of mass percentages of the crosslinking monomers can be freely combined within the range of 0.5% to 2.0%.

This application further provides a preparation method of negative electrode binder. The method includes the following steps.

S10. Mixing the aromatic vinyl monomer, the ethylenically unsaturated carboxylic acid monomer, the ethylenically unsaturated carboxylic ester monomer, the monomer having a lithium sulfonate group, and part of the emulsifier, and then adding the mixture to part of water for emulsification to obtain a pre-emulsion.

S20. Mixing part of the initiator with the remaining emulsifier and water, then mixing the mixture with part of the pre-emulsion and heating to about 80°C, slowly adding the remaining initiator and the crosslinking monomer dropwise, and controlling temperature of the reaction solution at about 80°C.

S30. Slowly adding the remaining pre-emulsion to the reaction in S20, and maintaining at that temperature for about 4 h.

S40. After the reaction is completed, cooling to room temperature, and adjusting the pH value of the product to obtain a negative electrode binder.

In some embodiments of this application, the negative electrode current collector may be made of a metal foil material, a porous metal plate, or the like. For example, the material of the negative electrode current collector may be but is not limited to a foil material or porous plate made of metal such as copper, nickel, titanium, or iron or alloys thereof. Further, in some specific embodiments of this application, the negative electrode current collector is made of copper foil.

A negative electrode active material in the negative electrode active material layer may be but is not limited to one or more of natural graphite, artificial graphite, soft carbon, hard carbon, meso-carbon microbeads, nanocarbon, carbon fiber, elemental silicon, silicon-oxygen compound, silicon-carbon composite, silicon alloy, elemental tin, tin-oxygen compound, tin-carbon composite, tin alloy, or lithium titanate.

In addition to the negative electrode active material, the negative electrode active material layer further includes a conductive agent and a binder. Type of the conductive agent in the negative electrode active material layer is not specifically limited in this application, and may be selected based on actual needs. The binder is the negative electrode binder in the foregoing embodiments, and for the specific constituents of the negative electrode binder, reference is made to the foregoing description, which are not described herein again.

For example, the conductive agent may be but is not limited to one or more of graphite, superconducting carbon, acetylene black, carbon black, Ketjen black, carbon dots, carbon nanotubes, graphene, or carbon nanofiber.

In some embodiments of this application, the negative electrode active material layer may further include a thickener, such as carboxymethyl cellulose (CMC).

The negative electrode may be prepared by using a conventional method in the art. In an example, the negative electrode active material (such as graphite), the conductive agent (such as carbon black), the negative electrode binder, and the solvent are mixed at the foregoing ratio to produce a negative electrode slurry; and the negative electrode slurry is applied onto a surface of the copper foil, followed by processes such as drying, to obtain a negative electrode.

In these embodiments of this application, the positive electrode includes a positive electrode current collector and a positive electrode active material layer disposed on a surface of the positive electrode current collector. The positive electrode current collector and the positive electrode active material layer are not specifically limited, and may be selected based on actual needs.

In some embodiments of this application, the positive electrode current collector may be but is not limited to a metal foil or a porous metal foil. For example, the positive electrode current collector may be made of one or more of aluminum, aluminum alloy, copper, copper alloy, nickel, nickel alloy, titanium, titanium alloy, silver, or silver alloy.

In some embodiments of this application, the positive electrode active material layer includes a positive electrode active material, a conductive agent, a binder, and a solvent. The positive electrode active material layer can reversibly intercalate and release lithium ions.

For example, the positive electrode active material may be a lithium transition metal composite, where transition metal may be one or more of Mn, Fe, Ni, Co, Cr, Ti, Zn, V, Al, Zr, Ce, or Mg.

In an example, the lithium transition metal composite may be lithium cobalt oxide.

For example, the binder may be one or more of styrene-butadiene rubber (SBR), carboxymethyl cellulose (CMC), polyvinylidene fluoride (PVDF), polytetrafluoroethylene (PTFE), ethylene-vinyl acetate (EVA) copolymer, polyvinyl alcohol (PVA), or polyvinyl butyral (PVB).

For example, the conductive agent is one or more of graphite, superconducting carbon, acetylene black, carbon black, Ketjen black, carbon dots, carbon nanotubes, graphene, or carbon nanofiber.

The positive electrode may be prepared by using a conventional method in the art. In an example, the positive electrode active material (such as lithium cobalt oxide), the conductive agent (such as carbon black), and the binder (such as polyvinylidene fluoride) are dispersed in the solvent (such as N-methylpyrrolidone, NMP for short) to produce a uniform positive electrode slurry, and the positive electrode slurry is applied onto the positive electrode current collector, followed by processes such as drying, to obtain a positive electrode.

In these embodiments of this application, the separator is not specifically limited, and may be a separator known in the art. For example, the separator may be a single-layer or multi-layer film made of one or more of glass fiber, non-woven fabric, polyethylene, polypropylene, or polyvinylidene fluoride.

In these embodiments of this application, the electrolyte is not specifically limited, and may be an electrolyte known in the art. For example, the electrolyte includes an organic solvent and an electrolytic salt, where the organic solvent may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methanesulfonate (EMS), or diethyl sulfone (ESE); and the electrolytic salt may be one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), or lithium tetrafluoro(oxalato)phosphate (LiTFOP).

The electrochemical apparatus of this application is not particularly limited, and may include any apparatus in which electrochemical reactions take place. In some embodiments, the electrochemical apparatus may include but is not limited to a lithium-ion battery.

A preparation process of the electrochemical apparatus is well known to persons skilled in the art, and is not particularly limited in this application. For example, the preparation process may include but is not limited to the following steps: a positive electrode plate, a separator, and a negative electrode plate are stacked in sequence and go through operations such as winding and folding as needed to obtain an electrode assembly with a winding structure, the electrode assembly is put into a packaging bag, an electrolyte is injected into the packaging bag, and the packaging bag is sealed to obtain an electrochemical apparatus; or a positive electrode, a separator, and a negative electrode are stacked in sequence, four corners of the entire laminated structure are fixed with tapes to obtain an electrode assembly with a laminated structure, the electrode assembly is put into a packaging bag, an electrolyte is injected into the packaging bag, and the packaging bag is sealed to obtain an electrochemical apparatus. In addition, an overcurrent prevention element, a guide plate, and the like may also be put into the packaging bag as needed, so as to prevent pressure increase, overcharge, and overdischarge inside the electrochemical apparatus.

In some embodiments of this application, a discharge rate of the electrode assembly at -20°C, 3.4 V, and 0.2C is 40% to 48%.

This application further provides an electronic apparatus including the electrochemical apparatus according to any one of the foregoing embodiments of this application. The electrochemical apparatus provided in this application has good cycling performance and safety performance, and thus the electronic apparatus provided in this application has a long service life and good performance.

The electronic apparatus of this application is not particularly limited and may be any known electronic apparatus in the prior art. For example, the electronic apparatus includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

In the following specific examples, an example in which a lithium-ion battery is used as an electrochemical apparatus is used to illustrate this application in detail. However, the electrochemical apparatus of this application is not limited to the lithium-ion battery. Persons skilled in the art should understand that the following description is only used as an example for illustration and does not limit the protection scope of this application. The raw material constituents in the following examples are measured by mass.

### Example 1

This example provides a preparation method of negative electrode binder, and details are as follows.

S10. 1 part fatty alcohol ethoxylate, 25 parts styrene, 24 parts butyl acrylate, 1.5 parts acrylic acid, and 5 parts lithium 2-acrylamido-2-methylpropanesulfonate were mixed, and the mixture was added to 39.95 parts water for emulsification to obtain a pre-emulsion.

S20. 0.05 parts azobisisobutyronitrile, 0.5 parts fatty alcohol ethoxylate, and 6 parts water were evenly mixed, then the mixture and 1/3 of the pre-emulsion were poured into a reactor and heated and stirred, 0.05 parts azobisisobutyronitrile and 1 part tris(propylene glycol) diacrylate were slowly added dropwise when temperature rose to about 80°C, and the temperature was controlled at about 80°C.

S30. The remaining 2/3 of the emulsion was slowly added dropwise, the emulsion was kept in a bluish state, and maintained at that temperature for about 4 h.

S40. After the reaction was completed, the resulting product was cooled to room temperature, and the pH value was adjusted to between 7 and 8 to obtain a negative electrode binder.

Preparation of negative electrode: Artificial graphite, carbon black, sodium carboxymethyl cellulose, and the negative electrode binder were added at a mass ratio of 97.3:0.5:1.2:1.0 into water, and stirred to produce a negative electrode slurry; and the negative electrode slurry was applied onto a surface of a 6 um thick copper foil using an extrusion coater at a coating speed of 18 m/min, and baked in an oven until the electrode plate is dried, to obtain a negative electrode.

Preparation of positive electrode: Lithium cobalt oxide, carbon black, polyvinylidene fluoride, and NMP solvent were stirred to produce a positive electrode slurry, and then the positive electrode slurry was applied onto a surface of a 6 um thick aluminum foil, followed by drying, to obtain a positive electrode.

Separator: Ceramic was applied onto one surface and aqueous vinylidene fluoride-hexafluoropropylene copolymer was applied onto two surfaces.

Electrolyte: 1 mol/L lithium hexafluorophosphate + (ethylene carbonate + propylene carbonate + diethyl carbonate + ethyl propionate + fluoroethylene carbonate + 1,3-propane sultone) solvent.

The positive electrode and the negative electrode were welded with tabs, and then wound with the separator to form a cell. The cell was packaged using an aluminum-plastic film, and baked in vacuum for 24 h to remove moisture. Then, the electrolyte was injected, and left standing at high temperature. Formation and sorting were performed on the battery to obtain a rectangular pouch lithium-ion battery of 3.8 mm in thickness, 64 mm in width, and 82 mm in height.

### Example 2

The difference from Example 1 was that in this example, 0.5 parts lithium 2-acrylamido-2-methylpropanesulfonate monomer was used instead of 5 parts lithium 2-acrylamido-2-methylpropanesulfonate monomer.

### Example 3

The difference from Example 1 was that in this example, 3 parts lithium 2-acrylamido-2-methylpropanesulfonate monomer was used instead of 5 parts lithium 2-acrylamido-2-methylpropanesulfonate monomer.

### Example 4

The difference from Example 1 was that in this example, 10 parts lithium 2-acrylamido-2-methylpropanesulfonate monomer was used instead of 5 parts lithium 2-acrylamido-2-methylpropanesulfonate monomer.

### Example 5

The difference from Example 1 was that in this example, 15 parts lithium 2-acrylamido-2-methylpropanesulfonate monomer was used instead of 5 parts lithium 2-acrylamido-2-methylpropanesulfonate monomer.

### Example 6

The difference from Example 1 was that in this example, 5 parts lithium p-styrenesulfonate monomer was used instead of 5 parts lithium 2-acrylamido-2-methylpropanesulfonate monomer.

### Example 7

The difference from Example 1 was that in this example, 5 parts lithium triflate monomer was used instead of 5 parts lithium 2-acrylamido-2-methylpropanesulfonate monomer.

### Example 8

The difference from Example 1 was that in this example, 5 parts lithium dodecyl sulfonate monomer was used instead of 5 parts lithium 2-acrylamido-2-methylpropanesulfonate monomer.

### Example 9

The difference from Example 1 was that in this example, artificial graphite, carbon black, sodium carboxymethyl cellulose, and the negative electrode binder were added at a mass ratio of 97.5:0.5:1.2:0.8 into water, and stirred to produce a negative electrode slurry; and the negative electrode slurry was applied onto a surface of a 6 um thick copper foil, to obtain a negative electrode.

### Example 10

The difference from Example 1 was that in this example, artificial graphite, carbon black, sodium carboxymethyl cellulose, and the negative electrode binder were added at a mass ratio of 97.1:0.5:1.2:1.2 into water, and stirred to produce a negative electrode slurry; and the negative electrode slurry was applied onto a surface of a 6 um thick copper foil, to obtain a negative electrode.

### Comparative Example 1

The difference from Example 1 was that in this comparative example, no lithium 2-acrylamido-2-methylpropanesulfonate was added.

### Test examples

The lithium-ion batteries prepared in Examples 1 to 10 and Comparative Example 1 were subjected to performance tests, and the test processes are as follows.

### (1) Stability of negative electrode slurry

A cup of negative electrode slurry was taken and placed in a room temperature environment. After 48 h, the slurry was scraped with an iron sheet or spatula, and then the iron sheet or spatula was held vertically to allow the slurry to flow naturally. If clumps of slurry remained on the iron sheet or spatula and did not flow off properly, it indicated sedimentation of the slurry. Otherwise, the slurry had no sedimentation.

### (2) Lithium content

0.5 g of binder adhesive film/negative electrode plate powder (scraped from the electrode plate) was taken and digested with 10 ml nitric acid, and then tested using ICP-OES (PE 7000DV). The obtained spectrum was compared with the standard curve method, to obtain the lithium content.

### (3) Infrared test

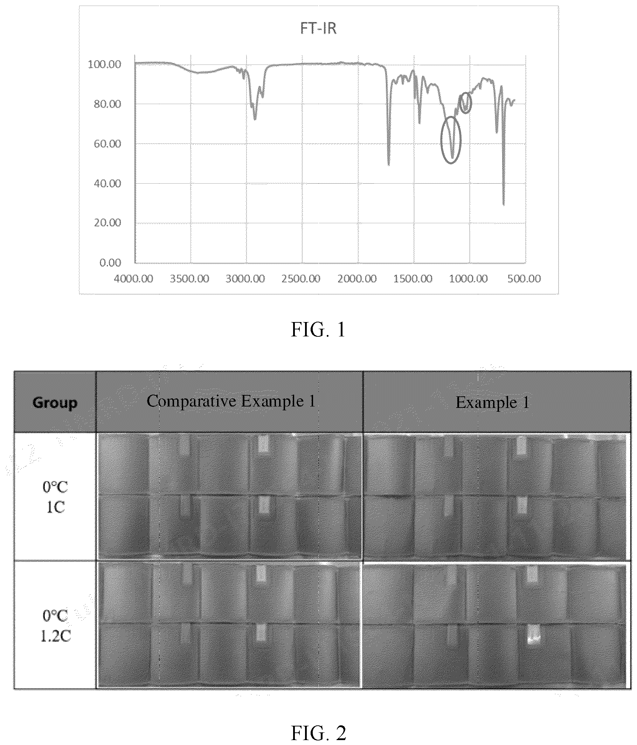

Powder was scraped from the negative electrode plate, and dried over an alcohol lamp. The dried powder and potassium bromide powder were mixed at a ratio of 1:100, and placed in an infrared mold to be pressed into a disc. The disc was placed in an infrared spectrometer Nicoletis10 for testing, to obtain the infrared spectrum shown in FIG. 1.

### (4) Ionic resistance

The negative electrode was punched into a size of 23 mm*35 mm, and assembled with a separator and pocket into a symmetrical battery in a glove box. Two drops of electrolyte were added, and the battery was sealed. The symmetrical battery was placed on a charge-discharge test channel for testing, and the ionic resistance Rion was calculated according to *Nm=*(*R*ion·*A·κ*)/*d.*

### (5) Ionic conductivity

The negative electrode binder was made into an adhesive film with uniform thickness and assembled into an SS/film/SS battery, with the adhesive film being sandwiched between two stainless steel electrode plates, and tested using an electrochemical workstation. Scanning was performed over a frequency range of 1 Hz to 105 Hz to obtain the EIS curve, and the ionic conductivity was calculated according to the formula σ=*d*/(*Rb*×*S*).

### (6) Discharge rate

The cell was fully charged and placed in a 25°C thermostat, and discharged to 3.4 V at 0.2C, and the initial capacity was recorded as q1. Then, another fully charged cell was placed in a -20°C thermostat and discharged to 3.4 V at 0.2C, and the initial capacity was recorded as q2. The discharge rate was (q1 - q2)/q1*100%.

### (7) Discharge test at 1.2C and 0°C

The cell was discharged, then fully charged at 1.2C in a 0°C thermostat, and discharged to 3.0 V at 0.5C. The cell was charged at 1.2C and discharged at 0.5C for 9 cycles, then fully charged at 1.2C, and disassembled. The interface was photographed for observing lithium precipitation.

### (8) Discharge test at 1.0C and 0°C

The cell was discharged, then fully charged at 1.0C in a 0°C thermostat, and discharged to 3.0 V at 0.5C. The cell was charged at 1.0C and discharged at 0.5C for 9 cycles, then fully charged at 1.0C, and disassembled. The interface was photographed for observing lithium precipitation.

### (9) Cycling retention rate

The cell was charged and discharged for one cycle, and the initial capacity was recorded as q3. The cell was further charged and discharged for 500 cycles, and the capacity after 500 cycles was recorded as q4. The capacity retention rate after 500 cycles at 25°C was (q3 - q4)/q3*100%.

**Table 1**

| Test Examples | Monomer having lithium sulfonate group and its percentage | Percentage of negative electrode binder | Stability of negative electrode slurry |
|---|---|---|---|
| Example 1 | Lithium 2-acrylamido-2-methylpropanesulfonate, 5% | 1.0% | No sedimentation |
| Example 2 | Lithium 2-acrylamido-2-methylpropanesulfonate, 0.5% | 1.0% | No sedimentation |
| Example 3 | Lithium 2-acrylamido-2-methylpropanesulfonate, 3% | 1.0% | No sedimentation |
| Example 4 | Lithium 2-acrylamido-2-methylpropanesulfonate, 10% | 1.0% | No sedimentation |
| Example 5 | Lithium 2-acrylamido-2-methylpropanesulfonate, 15% | 1.0% | No sedimentation |
| Example 6 | Lithium p-styrenesulfonate, 5% | 1.0% | No sedimentation |
| Example 7 | Lithium triflate, 5% | 1.0% | No sedimentation |
| Example 8 | Lithium dodecyl sulfonate, 5% | 1.0% | No sedimentation |
| Example 9 | Lithium 2-acrylamido-2-methylpropanesulfonate, 5% | 0.8% | No sedimentation |
| Example 10 | Lithium 2-acrylamido-2-methylpropanesulfonate, 5% | 1.2% | No sedimentation |
| Comparative Example 1 | None | 1.0% | No sedimentation |

**Table 2**

| Test Examples | Percentage of lithium in adhesive film | Lithium content in negative electrode | Ionic conductivity of negative electrode binder | Ionic resistance |
|---|---|---|---|---|
| Example 1 | 1.30% | 151 ppm | 0.072 mS/cm | 20 mΩ |
| Example 2 | 0.50% | 607 ppm | 0.072 mS/cm | 23 mΩ |
| Example 3 | 0.90% | 974 ppm | 0.072 mS/cm | 21 mΩ |
| Example 4 | 2.20% | 2532 ppm | 0.074 mS/cm | 17 mΩ |
| Example 5 | 3.80% | 3923 ppm | 0.071 mS/cm | 21 mΩ |
| Example 6 | 1.40% | 1514 ppm | 0.072 mS/cm | 21 mΩ |
| Example 7 | 1.30% | 1558 ppm | 0.07 mS/cm | 22 mΩ |
| Example 8 | 1.30% | 1413 ppm | 0.07 mS/cm | 22 mΩ |
| Example 9 | 1.30% | 1015 ppm | 0.072 mS/cm | 18 mΩ |
| Example 10 | 1.30% | 1623 ppm | 0.072 mS/cm | 21 mΩ |
| Comparative Example 1 | 0 | 0 | 0.06 mS/cm | 26 mΩ |

**Table 3**

| Test Examples | Discharge rate | Discharging at 1.5C and 12°C | Discharging at 1.0C and 0°C | Capacity retention rate after 500 cls at 25°C |
|---|---|---|---|---|
| Example 1 | 41.50% | No lithium precipitation | No lithium precipitation | 93.00% |
| Example 2 | 40.90% | Slight lithium precipitation | Slight lithium precipitation | 92.80% |
| Example 3 | 41.20% | No lithium precipitation | Slight lithium precipitation | 93.00% |
| Example 4 | 41.80% | No lithium precipitation | No lithium precipitation | 92.90% |
| Example 5 | 41.00% | Slight lithium precipitation | Slight lithium precipitation | 93.00% |
| Example 6 | 41.60% | No lithium precipitation | No lithium precipitation | 93.00% |
| Example 7 | 40.90% | No lithium precipitation | Slight lithium precipitation | 93.00% |
| Example 8 | 40.80% | No lithium precipitation | Slight lithium precipitation | 93.00% |
| Example 9 | 41.90% | No lithium precipitation | No lithium precipitation | 92.90% |
| Example 10 | 40.50% | No lithium precipitation | No lithium precipitation | 92.80% |
| Comparative Example 1 | 39.2% | Severe lithium precipitation | Severe lithium precipitation | 92.8% |

FIG. 1 is an infrared spectrogram of the negative electrode binder prepared in some examples of this application. It can be seen from FIG. 1 that there are distinct sulfonic acid group characteristic peaks at 1160 cm⁻¹ and 1050 cm⁻¹.

FIG. 2 is a surface state diagram of the lithium-ion batteries prepared in Example 1 and Comparative Example 1 being discharged at 1.0C and 0°C and at 1.0C and 0°C. It can be seen from FIG. 2 that the lithium precipitation during discharging in Example 1 is significantly less than that in Comparative Example 1.

It can be learned with reference to Tables 1 to 3 that the negative electrode binder with the structural formula I can provide a large number of lithium ion exchange sites to enhance the ionic conductivity of the negative electrode binder, thereby improving the fast charging performance and discharging performance of the lithium-ion battery in a low-temperature environment.

Persons skilled in the art should understand that the foregoing embodiments are exemplary rather than restrictive. Different technical features appearing in different embodiments can be combined to achieve beneficial effects. Based on the study of the accompanying drawings, specification, and claims, persons skilled in the art should understand and implement other variations of the disclosed embodiments. In the claims, the term "include" does not exclude other components or steps; an item not modified by a quantifier is intended to include one or more items and can be used interchangeably with "one or more items"; and the terms "first" and "second" are used to denote names and are not intended to indicate any specific order. Some technical features appearing in different dependent claims does not mean that these technical features cannot be combined to achieve beneficial effects.

## Claims

1. An electrochemical apparatus, wherein the electrochemical apparatus comprises:
a positive electrode;
a negative electrode, wherein the negative electrode comprises a negative electrode current collector and a negative electrode active material layer disposed on a surface of the negative electrode current collector, wherein the negative electrode active material layer comprises a negative electrode binder with structural formula I;
a separator disposed between the positive electrode and the negative electrode; and
an electrolyte; wherein 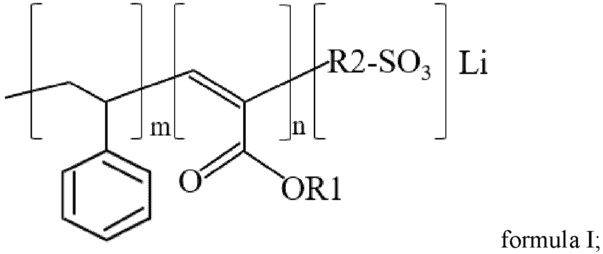 wherein
in the structural formula I, m is an integer in a range from 1 to 10000, n is an integer in a range from 1 to 10000, R1 is selected from C₁ to C₈ alkyl groups, and R2 is selected from C₁ to C₁₅ alkyl groups.

2. The electrochemical apparatus according to claim 1, wherein based on a total mass of the negative electrode active material layer, a mass percentage of the negative electrode binder is 0.5% to 5.0%.

3. The electrochemical apparatus according to claim 1, wherein based on a total mass of the negative electrode active material layer, a mass percentage of lithium in the negative electrode binder is 0.5% to 5%.

4. The electrochemical apparatus according to claim 1, wherein an ionic conductivity of the negative electrode binder is 0.06 mS/cm to 1.0 mS/cm.

5. The electrochemical apparatus according to claim 1, wherein the negative electrode binder comprises the following preparation raw materials: aromatic vinyl monomer, ethylenically unsaturated carboxylic acid monomer, ethylenically unsaturated carboxylic ester monomer, and a monomer having a lithium sulfonate group.

6. The electrochemical apparatus according to claim 5, wherein based on the total mass of the negative electrode binder, a mass percentage of the monomer having a lithium sulfonate group is 0.5% to 15%.

7. The electrochemical apparatus according to claim 5, wherein the aromatic vinyl monomer is selected from at least one of styrene, α-methylstyrene, or divinylbenzene;
the ethylenically unsaturated carboxylic acid monomer is selected from at least one of acrylic acid or methacrylic acid;
the ethylenically unsaturated carboxylic ester monomer is selected from at least one of methyl acrylate, ethyl acrylate, butyl acrylate, isopropyl acrylate, n-butyl acrylate, hexyl acrylate, heptyl acrylate, isooctyl acrylate, lauryl acrylate, methyl methacrylate, ethyl methacrylate, n-propyl methacrylate, isopropyl methacrylate, or isooctyl methacrylate; and
the monomer having a lithium sulfonate group is selected from at least one of lithium 2-acrylamido-2-methylpropanesulfonate, lithium p-styrenesulfonate, lithium triflate, or lithium dodecyl sulfonate.

8. The electrochemical apparatus according to any one of claims 5 to 7, wherein the preparation raw materials of the negative electrode binder further comprise crosslinking monomer; wherein the crosslinking monomer is selected from at least one of tris(propylene glycol) diacrylate, tripropylene glycol dimethacrylate, dipropylene glycol dimethacrylate, hydroxyethyl acrylate, hydroxypropyl acrylate, N-hydroxymethyl acrylamide, monobutyl itaconate, divinylbenzene, butadiene, isoprene, dicyclopentadiene, divinylnaphthalene, N,N'-methylenebisacrylamide, divinyl phthalate, pentaerythritol diallyl ether, pentaerythritol triallyl ether, pentaerythritol tetraallyl ether, trimethylolpropane diallyl ether, trimethylolpropane triallyl, or polyethyleneimine.

9. The electrochemical apparatus according to claim 1, wherein an ionic resistance of the negative electrode is 15 mΩ to 25 mΩ.

10. An electronic apparatus, wherein the electronic apparatus comprises the electrochemical apparatus according to any one of claims 1 to 9.
